# EUROPÄISCHE PATENTSCHRIFT

(11) **EP 4 484 769 B1**
(45) Veröffentlichungstag und Bekanntmachung des Hinweises auf die Patenterteilung: **18.11.2026**
(21) Anmeldenummer: 24179457.7
(22) Anmeldetag: 03.06.2024
(51) Int. Cl.: F16B 13/00, F16B 13/14

(54) **DÄMMSTOFFANKER, VERFAHREN UND BEFESTIGUNGSANORDNUNG MIT DEM DÄMMSTOFFANKER**
INSULATION ANCHOR, METHOD AND FASTENING ARRANGEMENT WITH THE INSULATION ANCHOR
ANCRAGE DE MATÉRIAU ISOLANT, PROCÉDÉ ET DISPOSITIF DE FIXATION COMPRENANT L'ANCRAGE DE MATÉRIAU ISOLANT

(30) Priorität: 28.06.2023 DE 102023117069; 26.02.2024 DE 102024105239
(43) Veröffentlichungstag der Anmeldung: 01.01.2025
(73) Patentinhaber: fischerwerke GmbH & Co. KG, 72178 Waldachtal (DE)
(72) Erfinder: Duffner, Philipp, 72181 Starzach-Bierlingen (DE); Lipps, Sebastian, 72226 Simmersfeld (DE)
(74) Vertreter: Suchy, Ulrich Johannes

(56) Entgegenhaltungen:
- EP-A1- 4 459 138
- DE-A1- 102017 101 797
- DE-U1- 202015 102 342
- DE-U1- 29 812 947
- US-A1- 2003 007 845

## Beschreibung

Die Erfindung betrifft einen Dämmstoffanker mit den Merkmalen des Oberbegriffs des Anspruchs 1, eine Befestigungsanordnung mit dem in einen Dämmstoff eingeschraubten Dämmstoffanker mit den Merkmalen des Oberbegriffs des Anspruchs 10 und ein Verfahren zur Befestigung des Dämmstoffankers in dem Dämmstoff mit den Merkmalen des Oberbegriffs des Anspruchs 13. Der Dämmstoffanker ist zum Einschrauben in einen Dämmstoff wie beispielsweise eine geschäumte Dämmstoffplatte oder eine beispielsweise Fasern aufweisende Dämmstoffmatte und zu einem Befestigen eines Anbauteils wie beispielsweise eines Briefkastens oder einer Außenleuchte mittels beispielsweise einer Schraube vorgesehen, die in den Dämmstoffanker eingeschraubt wird.

Das Gebrauchsmuster DE 298 12 947 U1 offenbart einen Dämmstoffanker zum Befestigen eines Anbauteils in einem Dämmstoff, beispielsweise in eine Dämmstoffplatte aus geschäumtem Polystyrol oder einer Dämmwolle. Der Dämmstoffanker weist einen Hohlschaft auf, an dem ein Außengewinde angeordnet ist, mit dem der Dämmstoffanker in den Dämmstoff eingeschraubt und in dem Dämmstoff befestigt werden kann, ohne dass eine zusätzliche Befestigung des Dämmstoffankers in einem Verankerungsgrund erforderlich ist, an dem die Dämmstoffplatte angebracht ist. Beispielsweise ist der Dämmstoff auf eine Stahlbetonwand als Verankerungsgrund aufgeklebt. In den Hohlschaft des in den Dämmstoff eingeschraubten Dämmstoffankers kann eine Schraube eingedreht werden, mit der ein Anbauteil, beispielsweise eine Lampe oder ein Briefkasten, am Dämmstoff befestigt werden kann.

Die Patentanmeldung US 2003/0007845 A1 offenbart eine Schraube aus Kunststoff zum Einschrauben in einen Werkstoff niedriger Festigkeit, beispielsweise Hartschaumkunststoff. Die Schraube weist einen Schaft mit einem tiefen V-Gewinde auf, wobei sich der Schaft konisch zu einer Schraubenspitze verjüngt. Das V-Gewinde weist einen Spitzenwinkel der Gewindezähne von weniger als 30° auf. In den Figuren 3 und 4 der Druckschrift ist eine Ausführung der Schraube mit einem rohrförmigen Schaft mit einer Längsbohrung dargestellt. Am Gewindefuß sind Verriegelungselemente angeordnet, die schwenkbar an Filmscharnieren gehalten sind und beim Einschrauben der Schraube in den Werkstoff in die Längsbohrung eingedrückt werden können. Beim Zurückdrehen der Schraube federn die Verriegelungselemente aus der Längsbohrung aus und wirken einem Losdrehen entgegen.

Aufgabe der Erfindung ist, die Befestigung eines Dämmstoffankers im Dämmstoff zu verbessern.

Diese Aufgabe wird erfindungsgemäß durch die Merkmale der Ansprüche 1, 10 und 13 gelöst.

Der erfindungsgemäße Dämmstoffanker mit den Merkmalen des Anspruchs 1 ist zu einem Einschrauben in einen Dämmstoff zu einer Befestigung eines Anbauteils an dem Dämmstoff vorgesehen. Der Dämmstoff kann beispielsweise eine geschäumte Dämmstoffplatte oder eine Faserdämmstoffmatte sein. Das Anbauteil wird beispielsweise mit einer Schraube an dem Dämmstoffanker befestigt, die beispielsweise durch das Anbauteil in den Dämmstoffanker eingeschraubt wird, nachdem der Dämmstoffanker in den Dämmstoff eingeschraubt worden ist.

Der erfindungsgemäße Dämmstoffanker weist einen insbesondere rohrförmigen und vorzugsweise geraden Hohlschaft zum Einschrauben der Schraube auf. Der Hohlschaft erstreckt sich entlang einer Längsachse des Dämmstoffankers und umfasst eine Umfangswand, an der außen ein Dämmstoffgewinde zum Einschneiden in den Dämmstoff angeordnet ist, das den Hohlschaft außen wendelförmig umschließt. Das Dämmstoffgewinde ist ein in axialer Richtung gesehen großflächiges Gewinde mit einem im Verhältnis zu seinem Außendurchmesser oder Kerndurchmesser in radialer Richtung hohen Gewindegang oder auch mehreren Gewindegängen, um dem Dämmstoffgewinde in einem Baustoff mit geringer mechanischer Festigkeit einen guten Halt in axialer Richtung des Dämmstoffgewindes zu geben. Der Außendurchmesser des Außengewindes ist insbesondere mindestens 1,5-mal, insbesondere mindestens doppelt so groß, wie sein Kerndurchmesser, der dem Außendurchmesser des Hohlschafts entspricht, an dem das Außengewinde angeordnet ist. Zudem weist der Hohlschaft an seinem vorderen Ende eine Spitze auf, die insbesondere derart ausgestaltet ist, dass der Dämmstoffanker ohne Vorbohren in den Dämmstoff einschraubbar ist. Insbesondere verjüngt sich der Hohlschaft zu seiner Spitze kegelförmig spitz, was ein Eindringen des Hohlschafts in den Dämmstoff ohne Vorbohren erleichtert. Zudem können Fräs- oder Schneidelemente, wie beispielsweise Nuten oder Rippen an der Spitze angeordnet sein. Insbesondere schließt die Spitze den Hohlschaft nach vorne ab, insbesondere dicht. An einem hinteren Ende weist der Dämmstoffanker einen Radialflansch als Kopf auf, dessen Durchmesser größer als der des davorliegenden Hohlschafts ist. Der Radialflansch dient als Anlagefläche zur Anlage des Anbauteils. Im Bereich zwischen der Spitze und dem Kopf weist der Hohlschaft insbesondere einen zylindrischen Abschnitt auf, dessen Mantelfläche der eines Zylinders entspricht.

Da der Dämmstoffanker durch die Ausbildung der Spitze ohne Vorbohren in den Dämmstoff eingebracht werden kann, wird der Dämmstoff beim Einbringen lokal im Bereich um den Dämmstoffanker verdichtet, was die Tragfähigkeit in Verbindung mit der nachträglich eingebrachten aushärtenden Masse, wie dies nachfolgend beschrieben ist, verbessert.

In einer Umfangswand seines Hohlschafts, insbesondere im Bereich des zylindrischen Abschnitts, weist der erfindungsgemäße Dämmstoffanker mehrere in einer Längsrichtung des Hohlschafts zueinander versetzte, vorzugsweise in der Umfangsrichtung zueinander versetzte Fenster für einen Austritt der aushärtenden Masse auf, die in nicht ausgehärtetem, insbesondere in einem fließfähigen oder pastösen Zustand, in den Hohlschaft eingebracht wird. Die aushärtende Masse ist beispielsweise ein Polyurethanschaum oder ein Klebstoff, insbesondere expandiert die aushärtende Masse nach dem Einbringen in den Hohlschaft. Der Dämmstoffanker wird in den Dämmstoff eingeschraubt und danach die aushärtende Masse in fließfähigem Zustand in den Hohlschaft des Dämmstoffankers eingebracht, derart, dass die fließfähige Masse durch die Fenster in den den Hohlschaft des Dämmstoffankers umgebenden Dämmstoff austritt. Im Dämmstoff härtet die Masse aus und verbessert einen Halt des Dämmstoffankers gegen ein Herausziehen aus dem Dämmstoff. In ausgehärtetem Zustand kann die aushärtende Masse auch als ausgehärtete Masse aufgefasst werden. Tritt die aushärtende Masse im Bereich des zylindrischen Abschnitts aus, so erzeugt sie aufgrund der zylindrischen Mantelfläche keine axial wirkende Kraft, die den Dämmstoffanker axial entgegen der axialen Einbringrichtung in den Dämmstoff beaufschlagen und aus dem Dämmstoff hinaus drücken würde.

Mindestens eines der Fenster ist an einem Übergang von dem Dämmstoffgewinde zu der Umfangswand des Hohlschafts angeordnet, das heißt unmittelbar an das Dämmstoffgewinde anschließend oder angrenzend. Tritt nun die aushärtende Masse durch das Fenster aus dem Hohlschaft aus, so befindet sie sich im Bereich des Dämmstoffgewindes, das sie nach dem Aushärten abstützt und/oder mit dem Dämmstoff verbindet, wodurch die Befestigung des Dämmstoffankers im Dämmstoff verbessert wird.

Erfindungsgemäß weist der Dämmstoffanker die Fenster ausschließlich in einer vorderen Hälfte einer Länge seines Hohlschafts auf, insbesondere ausschließlich in einem vorderen Teil des zylindrischen Abschnitts. Dadurch tritt die aushärtende Masse mit einem Abstand von einer Oberfläche des Dämmstoffs durch die Fenster aus dem Hohlschaft in den Dämmstoff aus, wodurch eine Gefahr eines Ausbrechens des Dämmstoffs bei einer Zugbeanspruchung des Dämmstoffankers niedrig ist.

Insbesondere ist ein vorderes Ende des Dämmstoffankers beziehungsweise des Hohlschafts des Dämmstoffankers durch die Spitze geschlossen, damit die fließfähige Masse nicht durch das vordere Ende aus dem Dämmstoffanker austritt. Die fließfähige Masse wird durch ein dem vorderen Ende gegenüberliegendes hinteres Ende in den Dämmstoffanker eingebracht, das deswegen und zum Einschrauben der Schraube in den Dämmstoffanker offen ist. Durch das geschlossene vordere Ende kann die Schraube nicht aus dem Dämmstoffanker nach vorne austreten.

Die abhängigen Ansprüche haben vorteilhafte Ausgestaltungen und Weiterbildungen der im Anspruch 1 angegebenen Erfindung zum Gegenstand.

Bei einer Ausführung des Dämmstoffgewindes des erfindungsgemäßen Dämmstoffankers weist das Dämmstoffgewinde Gewindeabschnitte auf, die sich jeweils über Umfangsabschnitte von beispielsweise 180° erstrecken. Die Umfangsabschnitte, über die sich die Gewindeabschnitte des Dämmstoffgewindes erstrecken, können auch kleiner oder größer sein, auch größer als 360°. In der Umfangsrichtung aneinander anschließende Gewindeabschnitte des Dämmstoffgewindes gehen bei dieser Ausführung der Erfindung an einer Übergangsstelle ineinander über, wobei die Gewindeabschnitte an der Übergangsstelle einen Axialversatz, also in Richtung der Längsachse, aufweisen. Der Axialversatz der Gewindeabschnitte des Dämmstoffgewindes an den Übergangsstellen ist vorzugsweise kleiner als eine Breite des Gewindegangs, wobei die Breite des Gewindegangs eine Breite eines Querschnitts des Gewindegangs ist. Der Querschnitt des Gewindegangs befindet sich in einer Axialebene des Dämmstoffankers beziehungsweise seines Hohlschafts beziehungsweise ist der Querschnitt entsprechend einem Steigungswinkel des Dämmstoffgewindes schräg zu der Axialebene. Durch den Axialversatz der Gewindeabschnitte an den Übergangsstellen, der nicht größer als die Breite des Gewindegangs ist, überdecken die Querschnitte der Gewindeabschnitte des Dämmstoffgewindes an den Übergangsstellen einander teilweise und stehen im Übrigen axial übereinander über. Dadurch sind Stirnflächen an den Übergangsstellen der Gewindeabschnitte des Dämmstoffgewindes gebildet und der Dämmstoff wird in diesen Bereichen auseinandergedrückt, so dass ein Hohlraum entsteht, in den die aushärtenden Masse leicht eindringen kann.

Eine Ausführung der Erfindung sieht eine Anordnung des mindestens einen Fensters für den Austritt der in den Hohlschaft eingebrachten Masse unmittelbar an den Axialversatz des Gewindegangs angrenzend beziehungsweise an eine der Stirnflächen des Gewindegangs des Dämmstoffgewindes an einer Übergangsstelle zweier aneinander anschließender Gewindeabschnitte des Gewindegangs des Dämmstoffgewindes angrenzend vor, insbesondere im Bereich des zylindrischen Abschnitts. Diese Anordnung des Fensters, sozusagen im "Schatten" des Axialversatzes des Gewindegangs des Dämmstoffgewindes an einer Übergangsstelle zweier aneinander anschließender Gewindeabschnitte, ist günstig für den Austritt der aushärtenden Masse aus dem Hohlschaft des Dämmstoffankers in den Dämmstoff, weil die Masse in ein Gegengewinde und/oder den bereits beschriebenen Hohlraum im Dämmstoff eindringt, den das Dämmstoffgewinde des Dämmstoffankers beim Einschrauben in den Dämmstoff in den Dämmstoff erzeugt.

Vorzugsweise ist das Fenster im Hohlschaft des Dämmstoffankers in einer Einschraubrichtung hinter der Übergangsstelle zweier aneinander anschließender Gewindeabschnitte des Gewindegangs des Dämmstoffgewindes angeordnet, derart, dass die fließfähige Masse in das zuvor in den Dämmstoffgewinde geschnittene Gegengewinde beziehungsweise den erzeugten Hohlraum austritt.

Eine Ausgestaltung der Erfindung sieht eine Anordnung des mindestens einen Fensters in der Umfangswand des Hohlschafts des Dämmstoffankers unmittelbar an eine hintere Gewindeflanke des Dämmstoffgewindes angrenzend vor. Beim Einschrauben des Dämmstoffankers in den Dämmstoff befindet sich die hintere Gewindeflanke des Dämmstoffgewindes entgegen der axialen Einbringrichtung in den Dämmstoff hinten und der Dämmstoffanker stützt sich mit der hinteren Gewindeflanke gegen ein Herausziehen aus dem Dämmstoff im Dämmstoff ab. Durch die erfindungsgemäße Anordnung des Fensters an die hintere Gewindeflanke angrenzend stützt die aushärtende Masse, wenn sie aus dem Fenster in den Dämmstoff ausgetreten und danach ausgehärtet ist, die hintere Gewindeflanke des Dämmstoffgewindes des erfindungsgemäßen Dämmstoffankers im Dämmstoff ab und/oder verklebt das Dämmstoffgewinde flächig mit dem Dämmstoff.

Dabei kann die Masse, insbesondere, wenn sie beim Austreten expandiert, weiter in den Dämmstoff eindringen als das Dämmstoffgewinde, so dass durch die dann ausgehärtete Masse eine größere Fläche im Dämmstoff aktiviert wird, als durch das Dämmstoffgewinde allein.

Eine Ausführung der Erfindung sieht vor, dass sich das mindestens eine Fenster in der Umfangswand des Hohlschafts des Dämmstoffankers über nicht mehr als ein Viertel eines Außenumfangs oder über nicht mehr als ein Drittel eines Außendurchmessers des Hohlschafts in der Umfangsrichtung des Hohlschafts erstreckt. Eine Schwächung einer mechanischen Festigkeit des Hohlschafts durch das oder durch mehrere Fenster wird dadurch begrenzt.

Um trotzdem eine große Austrittsfläche für die aushärtende Masse zu erreichen, erstreckt sich das mindestens eine Fenster in der Umfangswand des Hohlschafts des Dämmstoffankers bei Ausführungen der Erfindung über mindestens ein Viertel oder ein Drittel oder über etwa die Hälfte eines axialen Abstands einander zugewandter Gewindeflanken benachbarter Windungen des Dämmstoffgewindes. Diese Ausführung der Erfindung ist auch für Fenster möglich, die sich über mehr als ein Viertel eines Außenumfangs oder über mehr als ein Drittel eines Außendurchmessers des Hohlschafts in der Umfangsrichtung des Hohlschafts erstrecken.

Insbesondere sind mehrerer der Fenster oder alle der Fenster wie oben beschrieben angeordnet und/oder ausgestaltet.

Die Oberfläche des Dämmstoffs kann eine Putzschicht aufweisen, wie dies von Wärmedämmverbundsystemen bekannt ist.

Eine Ausgestaltung der Erfindung sieht drei Fenster in der Umfangswand des Hohlschafts des erfindungsgemäßen Dämmstoffankers vor, die um 120°, bezogen auf die Längsachse, in der Umfangsrichtung, zueinander versetzt sind. Vorzugsweise weisen die Fenster in der Längsrichtung ebenfalls einen Versatz zueinander auf, wobei der Versatz in der Längsrichtung durch die Anordnung der Fenster am Gewindegang des Dämmstoffgewindes und den Versatz der Fenster um die 120° in der Umfangsrichtung vorgegeben sein kann. Insbesondere weist diese Ausgestaltung der Erfindung ausschließlich die drei um 120° in der Umfangsrichtung zueinander versetzten Fenster und kein weiteres Fenster auf.

Gegenstand des Anspruchs 10 ist eine Befestigungsanordnung mit dem vorstehend erläuterten Dämmstoffanker, der in den Dämmstoff geschraubt ist.

Ausgestaltungen der Erfindung sehen einen Dämmstoffanker vor, der kürzer als der Dämmstoff dick ist derart, dass der Dämmstoffanker nicht gegen einen Verankerungsgrund stößt, auf dem der Dämmstoff befestigt ist, wenn der Dämmstoffanker vollständig in den Dämmstoff geschraubt wird. Der Dämmstoffanker ist dadurch ausschließlich im Dämmstoff verankert, insbesondere mit Abstand vom Verankerungsgrund.

Eine Ausgestaltung der erfindungsgemäßen Befestigungsanordnung sieht vor, dass der Dämmstoff, in den der Dämmstoffanker ohne Vorbohren geschraubt ist, die ausgehärtete Masse aufweist, die als aushärtende Masse in nicht ausgehärtetem Zustand, insbesondere in fließfähigem und/oder pastösem Zustand in den Hohlschaft des Dämmstoffankers eingebracht worden ist. Die aushärtende Masse tritt durch das oder die Fenster in der Umfangswand des Hohlschafts aus und dringt im Bereich des oder der Fenster in den Dämmstoff ein, der den Hohlschaft umgibt. Nach dem Aushärten der Masse bilden der Dämmstoffanker, der Dämmstoff und die ausgehärtete Masse die erfindungsgemäße Befestigungsanordnung. Die Schraube zum Befestigen des Anbauteils an dem Dämmstoffanker wird durch das offene hintere Ende in den Dämmstoffanker und in die im Dämmstoffanker ausgehärtete Masse geschraubt.

Einen besonders guten Halt hat der Dämmstoffanker in einem Schichtverbunddämmstoff oder einem geschichteten Faserstoff als Dämmstoff mit einer zu einer Längsachse des Hohlschafts des Dämmstoffankers senkrechten Schichtung. Unter einem geschichteten Faserstoff ist ein Faserstoff zu verstehen, der Fasern aufweist, wobei eine überwiegende Mehrzahl der Fasern von beispielsweise mehr als 75%, 85% oder 90% der Fasern parallel zu einer Ebene oder in sehr spitzen Winkeln von weniger als 30°, 15° und vorzugsweise weniger als 10° oder 7° zu der Ebene angeordnet sind. Das heißt die Fasern des Faserstoffs weisen eine Hauptrichtung auf. Die Ebene ist vorzugsweise parallel zu einer großen Seite des Faserstoffs, durch die der Dämmstoffanker in der erfindungsgemäßen Befestigungsanordnung in den Faserstoff als Dämmstoff geschraubt ist derart, dass die Längsachse des Hohlschafts des Dämmstoffankers in etwa senkrecht zu den Fasern beziehungsweise zu der Hauptrichtung der Fasern des Faserdämmstoffs ist.

Das erfindungsgemäße Verfahren des Anspruchs 13 sieht vor, dass der Dämmstoffanker, der einen Hohlschaft zum Einschrauben einer Schraube, ein Dämmstoffgewinde, das außen an einer Umfangswand des Hohlschafts zum Einschneiden in den Dämmstoff angeordnet ist, und eine Spitze an seinem vorderen Ende aufweist, insbesondere ohne Vorbohren, in den Dämmstoff geschraubt wird. Der Hohlschaft weist in der Umfangswand mindestens ein Fenster für einen Austritt einer in den Hohlschaft einbringbaren aushärtenden Masse auf, wobei das Fenster unmittelbar an eine Gewindeflanke des Dämmstoffgewindes an einem Übergang von dem Dämmstoffgewinde zur Umfangswand des Hohlschafts angrenzt. Anschließend wird die aushärtende Masse in nicht ausgehärtetem Zustand in den Hohlschaft des Dämmstoffankers eingebracht wird, bis die Masse durch das oder mehrere Fenster in der Umfangswand des Hohlschafts des Dämmstoffankers, insbesondere im zylindrischen Abschnitt, austritt und in den Dämmstoff gelangt, wo sie dann aushärtet und den Halt des Dämmstoffankers im Dämmstoff verbessert. Wird der Dämmstoffanker ohne Vorbohren in den Dämmstoff eingeschraubt, so wird dabei der Dämmstoff lokal verdichtet, was die Tragfähigkeit des Dämmstoffs verbessern kann.

Eine Ausgestaltung der Erfindung sieht vor, dass die aushärtende Masse zwischen dem Dämmstoff und einer Gewindeflanke des Dämmstoffgewindes des Dämmstoffankers in den Dämmstoff austritt, derart, dass die Masse nach dem Aushärten den Dämmstoffanker an der Gewindeflanke seines Dämmstoffgewindes im Dämmstoff abstützt. Insbesondere wenn die Masse bis außerhalb eines Umfangs des Dämmstoffgewindes in den Dämmstoff eindringt, vergrößert sie eine Stützfläche, mit der sich der Dämmstoffanker im Dämmstoff gegen Herausziehen abstützt und verbessert auf diese Weise den Halt des Dämmstoffankers im Dämmstoff.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden. Ausführungen der Erfindung, die nicht alle Merkmale des Ausführungsbeispiels, sondern einen grundsätzlich beliebigen Teil der gekennzeichneten Merkmale des Ausführungsbeispiels aufweisen, sind möglich.

Die Erfindung wird nachfolgend anhand eines in der Zeichnung dargestellten Ausführungsbeispiels näher erläutert. Es zeigen:

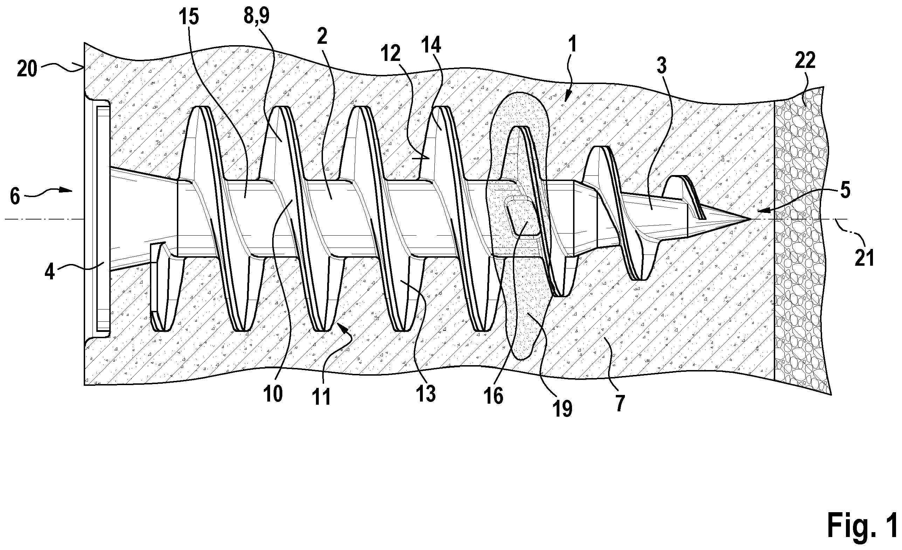

- Figur 1: eine Ansicht eines Dämmstoffankers gemäß der Erfindung; und

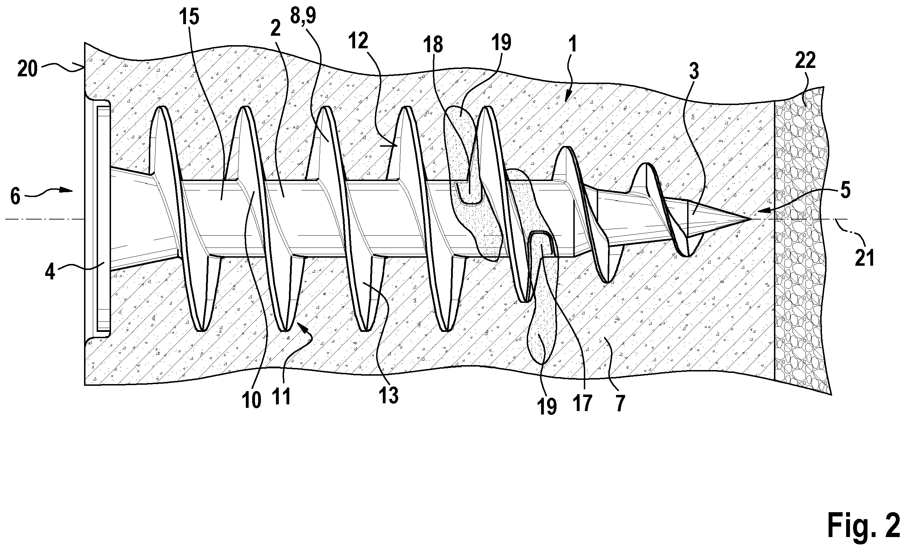

- Figur 2: eine Ansicht des Dämmstoffankers aus Figur 1 von einer gegenüberliegenden Seite.

Der in der Zeichnung dargestellte, erfindungsgemäße Dämmstoffanker 1 ist im Ausführungsbeispiel aus einem Stück durch Spritzgießen aus Kunststoff hergestellt. Andere Werkstoffe oder Herstellungsverfahren schließt die Erfindung nicht aus.

Der Dämmstoffanker 1 weist einen rohrförmigen Hohlschaft 2 mit einer nach vorne spitz zulaufenden kegelähnlichen, geschlossenen Spitze 3 an einem vorderen Ende 5 und einem Radialflansch als Kopf 4 an einem hinteren Ende 6 des Hohlschafts 2 auf. Im hinteren Ende 6 weist der Dämmstoffanker 1 einen in der Zeichnung nicht sichtbaren Innenstern oder Innensechskant als Werkzeugsitz zu einem durch Formschluss drehfesten Ansetzen eines Sternschlüssels oder eines Inbusschlüssels zu einem Drehantrieb des Dämmstoffankers 1 zum Einschrauben des Dämmstoffankers 1 in einen Dämmstoff 7 auf. Anders geformte Werkzeugsitze sind möglich. An die Spitze 3 schließt sich nach hinten ein zylindrischer Abschnitt mit zylindrischer Mantelfläche an.

Der erfindungsgemäße Dämmstoffanker 1 weist ein Dämmstoffgewinde 8 auf, das den Hohlschaft 2 im zylindrischen Abschnitt und der Spitze 3 koaxial zu einer Längsachse 21 des Hohlschafts 2 und wendelförmig umschließt. In etwa einem vorderen Viertel des Dämmstoffankers 1 verkleinert sich ein Außendurchmesser des Dämmstoffgewindes 8 nach vorn und das Dämmstoffgewinde 8 läuft im Bereich der Spitze 3 des Dämmstoffankers 1 aus. Hinten endet das Dämmstoffgewinde 8 im Bereich des hinteren Endes des zylindrischen Abschnitts in einem kurzen Abstand, der nicht größer als ein Außendurchmesser des Hohlschafts 2 ist, von dem Kopf 4.

Das Dämmstoffgewinde 8 ist ein in axialer Projektion großflächiges Gewinde, um einen guten Halt des Dämmstoffankers 1 in dem Dämmstoff 7 oder allgemein in einem Baustoff mit niedriger Festigkeit zu haben. "Großflächig" bedeutet, dass das Dämmstoffgewinde 8 eine in radialer Richtung vom Hohlschaft 2 als Kern des Dämmstoffgewindes 8 bis zu einem Außenrand beziehungsweise Umfangsrand des Dämmstoffgewindes 8 hohen Gewindegang 9 aufweist, im Verhältnis zum Außendurchmesser des Dämmstoffgewindes 8 oder zum Durchmesser des Kerns des Dämmstoffgewindes 8, der der Außendurchmesser des Hohlschafts 2 ist.

Im Ausführungsbeispiel weist das Dämmstoffgewinde 8 einen Gewindedurchmesser zwischen 20 mm und 50 mm und vorzugsweise von etwa 30 mm auf. Ein Verhältnis des Gewindedurchmessers des Dämmstoffgewindes 8 zum Durchmesser seines Kerns beträgt mindestens 1,5 und/oder sein Flankenwinkel ist sehr spitz, das heißt, spitzer als bei typischen, selbstschneidenden Schrauben für Holz oder Blech. Im Ausführungsbeispiel weist das Dämmstoffgewinde 8 einen Flankenwinkel von nicht mehr als 30° auf.

Im Ausführungsbeispiel der Erfindung weist der Gewindegang 9 des Dämmstoffgewindes 8 Gewindeabschnitte 10 auf, die sich über begrenzte Umfangsabschnitte erstrecken. Im Ausführungsbeispiel erstrecken sich die Gewindeabschnitte 10 des Gewindegangs 9 des Dämmstoffgewindes 8 über 180°. Die Gewindeabschnitte 10 gehen an Übergangsstellen 11 mit einem Axialversatz in sich anschließende Gewindeabschnitte 10 über, wobei sich die Übergangsstellen 11 im Ausführungsbeispiel in einer Axialebene des Dämmstoffankers 1 und des Hohlschafts 2 befinden. Im Ausführungsbeispiel geht der Axialversatz der Gewindeabschnitte 10 nach vorn, das heißt, ein sich in einer Einschraubrichtung des Dämmstoffgewindes 8 und des Dämmstoffankers 1 anschließender Gewindeabschnitt 10 beziehungsweise ein dem vorderen Ende 5 des Dämmstoffankers 1 näherer Gewindeabschnitt 10 ist zur Spitze 3 am vorderen Ende 5 hin, parallel zur Längsachse 21 versetzt.

Der Axialversatz aneinander anschließender Gewindeabschnitte 10 an den Übergangsstellen 11 ist kleiner als die Gewindeabschnitte 10 an der jeweiligen Übergangsstelle 11 breit sind. Eine Breite der Gewindeabschnitte 10 des Gewindegangs 9 des Dämmstoffgewindes 8 ist eine Breite eines Querschnitts des Gewindegangs 9 des Dämmstoffgewindes 8 in der Axialebene des Dämmstoffankers 1 und seines Hohlschafts 2. Durch den Axialversatz der Gewindeabschnitte 10 des Gewindegangs 9 des Dämmstoffgewindes 8 an den Übergangsstellen 11, der kleiner als die Breite des Gewindegangs 9 ist, überlappen sich die Gewindeabschnitte 10 an den Übergangsstellen 11 teilweise und stehen teilweise axial übereinander über.

Das Dämmstoffgewinde 8 weist Stirnflächen 12 an jeweils einer vorderen und einer hinteren Gewindeflanke 13, 14 des Dämmstoffgewindes 8 und seines Gewindegangs 9 an den Übergangsstellen 11 der Gewindeabschnitte 10 auf. Die Stirnflächen 12 befinden sich in der Axialebene des Dämmstoffankers 1 und seines Hohlschafts 2 oder die Stirnflächen 12 sind schräg zu der Axialebene. Im Ausführungsbeispiel weisen die Stirnflächen 12 an den Übergangsstellen 11 der Gewindeabschnitte 10 einen Winkel von etwa 45° zu der Axialebene des Dämmstoffankers 1 und seines Hohlschafts 2 auf.

In einer Umfangswand 15 des zylindrischen Abschnitts des Hohlschafts 2 weist der Hohlschaft 2 im Ausführungsbeispiel drei Fenster 16, 17, 18 auf. Die Fenster 16, 17, 18 sind Öffnungen oder Durchbrüche in der Umfangswand 15 des Hohlschafts 2 des erfindungsgemäßen Dämmstoffankers 1, die von innen nach außen beziehungsweise umgekehrt durchgehen. Die Fenster 16, 17, 18 sind für einen Austritt einer aushärtenden Masse 19 in den Dämmstoff 7, in den der Dämmstoffanker 1 eingeschraubt wird, vorgesehen. Die aushärtende Masse 19 ist vorliegend ein Polyurethanschaum, der in fließfähigem beziehungsweise pastösem Zustand durch das offene, hintere Ende 6 in den Hohlschaft 2 eingebracht wird und durch die Fenster 16, 17, 18 aus dem Hohlschaft 2 austritt, expandiert und aushärtet. Das vordere Ende 5 des Dämmstoffankers 1 mit der Spitze 3 sind nach außen geschlossen, damit die aushärtende Masse 19 nicht vorne vor dem zylindrischen Abschnitt des Hohlschafts 2 austritt, wodurch der Dämmstoffanker 1 entgegen der Einbringrichtung beaufschlagt werden würde, falls die Masse zwischen der Spitze 3 und einem Verankerungsgrund 22, auf dem der Dämmstoff 7 befestigt ist, expandiert. Im Ausführungsbeispiel ist der Verankerungsgrund 22 eine Wand aus Stahlbeton, auf der der Dämmstoff 7 aufgeklebt ist.

Die Fenster 16, 17, 18 grenzen unmittelbar an eine der Gewindeflanken 13, 14 des Dämmstoffgewindes 8 beziehungsweise des Gewindegangs 9 an.

Ein erstes Fenster 16 befindet sich an der hinteren Gewindeflanke 14, die dem hinteren Ende 6 des Dämmstoffankers 1 zugewandt ist. Dieses Fenster 16 weist im Ausführungsbeispiel die Form eines Parallelogramms auf, ist in axialer Richtung des Dämmstoffankers 1 etwa halb so hoch wie ein Abstand einander zugewandter Gewindeflanken 13, 14 des Dämmstoffgewindes 8 voneinander und erstreckt sich in der Umfangsrichtung des Hohlschafts 2 über nicht mehr als etwa ein Viertel eines Außenumfangs des Hohlschafts 2 oder über nicht mehr als etwa ein Drittel des Außendurchmessers des Hohlschafts 2.

Die beiden anderen Fenster 17, 18 sind an zwei Axialversätzen des Dämmstoffgewindes 8 angeordnet, das heißt an zwei der Übergangsstellen 11 des Gewindegangs 9 des Dämmstoffgewindes 8. Diese beiden Fenster 17, 18 sind in Innenecken der Stirnflächen 12 des Gewindegangs 9 und einer Gewindeflanke 13, 14 unmittelbar an die Stirnfläche 12 und an die Gewindeflanke 13, 14 angrenzend in der Umfangswand 15 des Hohlschafts 2 des Dämmstoffankers 1 angeordnet.

Eines der beiden anderen Fenster 17, 18, das zweite Fenster 17, ist an der vorderen Gewindeflanke 13 und an einer entgegen einer Einschraubrichtung des Dämmstoffgewindes 8 und des Dämmstoffankers 1 gerichteten Stirnfläche 12. Das dritte Fenster 18 ist an der hinteren Gewindeflanke 14 und an einer in der Einschraubrichtung gerichteten Stirnfläche 12 des Gewindegangs 9 angeordnet.

Im Ausführungsbeispiel der Erfindung befinden sich alle drei Fenster 16, 17, 18 in einer vorderen Hälfte einer Länge des Hohlschafts 2 des Dämmstoffankers 1, damit die aushärtende Masse 19 mit einem Abstand von einer Oberfläche 20 des Dämmstoffs 7 in den Dämmstoff 7 austritt, wodurch die Verankerung im Dämmstoff 7 besser ist als bei einem oberflächennahen Austritt der aushärtenden Masse 19 in den Dämmstoff 7. Einer klaren Darstellung wegen ist der Dämmstoff 7 nur im Bereich der Fenster 16, 17, 18 gezeichnet.

Im Ausführungsbeispiel sind die drei Fenster 16, 17, 18 in der Umfangsrichtung um etwa 120° um die Längsachse 21 und in der Längsrichtung des Hohlschafts 2 zueinander versetzt, wobei sich der Versatz auf Flächenmittelpunkte der Fenster 16, 17, 18 bezieht.

Eine andere Anzahl und/oder Verteilung der Fenster 16, 17, 18 über den Umfang der Umfangswand 15 des Hohlschafts 2 des Dämmstoffankers 1 und in der Längsrichtung des Hohlschafts 2 schließt die Erfindung nicht aus.

Zu einer Befestigung in dem Dämmstoff 7 wird der Dämmstoffanker 1 erfindungsgemäß in den Dämmstoff 7 eingeschraubt. Hierzu wird zunächst die spitz zulaufende Spitze 3 am Dämmstoff 7 angesetzt und durch Druck beim Einschrauben ohne Vorbohren in den Dämmstoff 7 eingebracht. Dabei wird der Dämmstoff verdrängt und lokal, im Bereich des Dämmstoffankers 1 verdichtet, was die Tragfähigkeit erhöhen kann. Nach dem Einschrauben wird die aushärtende Masse 19, im Ausführungsbeispiel ein Polyurethanschaum, in fließfähigem, beispielsweise pastösem Zustand durch das offene hintere Ende 6 in den Hohlschaft 2 des Dämmstoffankers 1 eingebracht, so dass die Masse 19 durch die Fenster 16, 17, 18 im zylindrischen Abschnitt aus dem Hohlschaft 2 austritt und in den verdichteten Dämmstoff 7 eindringt, expandiert und aushärtet.

Die Masse 19 tritt zwischen einer Gewindeflanke 13, 14 des Dämmstoffgewindes 8 und dem Dämmstoff 7 durch die Fenster 16, 17, 18 aus dem Hohlschaft 2 in den Dämmstoff 7 aus, in den der Dämmstoffanker 1 geschraubt ist. Insbesondere an der hinteren Gewindeflanke 14 des Dämmstoffgewindes 8 stützt die in den Dämmstoff 7 geflossene Masse 19, wenn sie ausgehärtet ist, den Dämmstoffanker 1 im Dämmstoff 7 gegen das Herausziehen aus dem Dämmstoff 7 ab.

Im Dämmstoff 7 härtet die Masse 19 aus und verbessert eine Verankerung des Dämmstoffankers 1 in dem Dämmstoff 7, in dem sie den Dämmstoff 7 verfestigt, die vom Dämmstoffgewinde 8 aktivierbare Fläche vergrößert und den Dämmstoff 7 mit dem Dämmstoffanker 1 verklebt. Der Halt des Dämmstoffankers 1 in dem Dämmstoff 7 gegen ein Herausziehen des Dämmstoffankers 1 aus dem Dämmstoff 7 ist dadurch verbessert.

Ein nicht dargestelltes Anbauteil wie beispielsweise ein Briefkasten oder eine Außenleuchte lässt sich mit einer Schraube (nicht dargestellt) an dem Dämmstoffanker 1 befestigen, die nach dem Einschrauben des Dämmstoffankers 1 in den Dämmstoff 7 und nach dem Einbringen der aushärtenden Masse 19 in den Hohlschaft 2 des Dämmstoffankers 1 geschraubt wird. Die Schraube kann vor, während oder nach dem Aushärten der Masse 19 in den Hohlschaft 2 geschraubt werden.

Der in den Dämmstoff 7 geschraubte Dämmstoffanker 1, der Dämmstoff 7 und die in den Hohlschaft 2 des Dämmstoffankers 1 eingebrachte und durch die Fenster 16, 17, 18 in den Dämmstoff 7 ausgetretene, aushärtende oder ausgehärtete Masse 19 bilden eine Befestigungsanordnung gemäß der Erfindung.

Der Dämmstoffanker 1 ist kürzer als der Dämmstoff 7 dick ist, damit der Dämmstoffanker 1 beim Einschrauben in den Dämmstoff 7 nicht gegen einen möglicherweise harten Untergrund stößt, auf dem der Dämmstoff 7 befestigt ist, was ein Einschrauben stören und den Dämmstoffanker 8 und/oder den Dämmstoff 7 beschädigen könnte.

Bei Ausführungen der Erfindung ist der Dämmstoff 7 ein Schichtverbunddämmstoff mit einer zu einer Längsachse des Hohlschafts 2 des Dämmstoffankers 1 in etwa senkrechten Schichtung. Schichten eines solchen Dämmstoffs 7 lenken die aushärtende, durch die Fenster 16, 17, 18 aus dem Hohlschaft 2 des Dämmstoffankers 1 austretende, fließfähige Masse 19 radial vom Hohlschaft 2 weg nach außen, wodurch die Masse bis außerhalb des Außenumfangs des Dämmstoffgewindes 8 in den Dämmstoff 7 fließt. Eine Abstützfläche des Dämmstoffgewindes 8 im Dämmstoff 7 wird vergrößert und der Halt des Dämmstoffankers 1 im Dämmstoff 7 verbessert.

Andere Ausführungen der erfindungsgemäßen Befestigungsanordnung weisen einen geschichteten Faserstoff mit zu der Längsachse des Hohlschafts 2 des Dämmstoffankers in etwa senkrechter Hauptrichtung seiner Fasern als Dämmstoff 7 auf. Damit ist ein Faserstoff gemeint, dessen überwiegende Anzahl der Fasern von beispielsweise mehr als 75%, 85% oder 90% der Fasern parallel zu einer Ebene oder in sehr spitzen Winkeln von weniger als 30°, 15° und vorzugsweise weniger als 10° oder 7° zu der Ebene angeordnet sind. Diese Ebene ist insbesondere parallel zu der Oberfläche 20 des Dämmstoffs 7, durch die der Dämmstoffanker 1 in den Dämmstoff 7 geschraubt wird oder ist, wodurch die Fasern des Faserstoffs in etwa senkrecht zu der Längsachse des Hohlschafts 2 des Dämmstoffankers 1 sind. Die Fasern des Dämmstoffs 7 weisen eine Hauptrichtung in etwa senkrecht zu der Längsachse des Dämmstoffankers 1 und seines Hohlschafts 2 auf.

## Patentansprüche

1. Dämmstoffanker (1) zum Einschrauben in einen Dämmstoff (7) zum Befestigen eines Anbauteils an dem Dämmstoff (7), wobei der Dämmstoffanker (1) einen Hohlschaft (2) zum Einschrauben einer Schraube, ein Dämmstoffgewinde (8) , das außen an einer Umfangswand (15) des Hohlschafts (2) zum Einschneiden in den Dämmstoff (7) angeordnet ist, und dass der Hohlschaft (2) eine Spitze (3) an seinem vorderen Ende aufweist, die insbesondere derart ausgestaltet ist, dass der Dämmstoffanker (1) ohne Vorbohren in den Dämmstoff (7) einschraubbar ist, wobei der Hohlschaft (2) in der Umfangswand (15) mehrere in einer Längsrichtung des Hohlschafts (2) zueinander versetzte Fenster (16, 17, 18) für einen Austritt einer in den Hohlschaft (2) einbringbaren aushärtenden Masse (19) aufweist, wobei mindestens eines der Fenster (16, 17, 18) unmittelbar an eine Gewindeflanke (13, 14) des Dämmstoffgewindes (8) an einem Übergang von dem Dämmstoffgewinde (8) zur Umfangswand (15) des Hohlschafts (2) angrenzt, **dadurch gekennzeichnet, dass** der Dämmstoffanker (1) die Fenster (16, 17, 18) ausschließlich in einer vorderen Hälfte einer Länge des Hohlschafts (2) aufweist.

2. Dämmstoffanker nach Anspruch 1, **dadurch gekennzeichnet, dass** ein Gewindegang (9) des Dämmstoffgewindes (8) einen Axialversatz aufweist, der kleiner als eine Breite des Gewindegangs (9) am Axialversatz ist, und dass das Fenster (17, 18) für den Austritt der in den Hohlschaft (2) eingebrachten Masse (19) unmittelbar an den Axialversatz des Gewindegangs (9) angrenzt.

3. Dämmstoffanker nach Anspruch 2, **dadurch gekennzeichnet, dass** das Fenster (17, 18) an einen Axialversatz des Dämmstoffgewindes (8) angrenzt, der einer Einschraubrichtung des Dämmstoffgewindes (8) abgewandt ist.

4. Dämmstoffanker nach Anspruch 1, **dadurch gekennzeichnet, dass** das Fenster (16, 18) unmittelbar an eine hintere Gewindeflanke (14) des Dämmstoffgewindes (8) angrenzt.

5. Dämmstoffanker nach Anspruch 4, **dadurch gekennzeichnet, dass** sich das Fenster (16) über nicht mehr als ein Viertel eines Außenumfangs des Hohlschafts (2) oder über nicht mehr als ein Drittel eines Außendurchmessers des Hohlschafts (2) in der Umfangsrichtung des Hohlschafts (2) erstreckt.

6. Dämmstoffanker nach einem oder mehreren der vorhergehenden Ansprüche, **dadurch gekennzeichnet, dass** sich das Fenster (16) über mindestens ein Viertel oder ein Drittel oder über etwa die Hälfte eines axialen Abstands einander zugewandter Gewindeflanken (13, 14) benachbarter Windungen des Dämmstoffgewindes (8) erstreckt.

7. Dämmstoffanker nach einem oder mehreren der vorhergehenden Ansprüche, **dadurch gekennzeichnet, dass** die Fenster (16, 17, 18) in einem zylindrischen Teil des Hohlschafts (2) und hinter der Spitze (3) angeordnet sind.

8. Dämmstoffanker nach einem oder mehreren der vorhergehenden Ansprüche, **dadurch gekennzeichnet, dass** der Dämmstoffanker (1) drei Fenster (16, 17, 18) aufweist, die in der Umfangsrichtung des Hohlschafts (2) um 120° zueinander versetzt sind.

9. Dämmstoffanker nach einem oder mehreren der vorhergehenden Ansprüche, **dadurch gekennzeichnet, dass** der Hohlschaft (2) des Dämmstoffankers (1) an seinem vorderen Ende (5) geschlossen ist, insbesondere durch die Spitze (3).

10. Befestigungsanordnung mit einem Dämmstoff (7) und einem in den Dämmstoff (7) eingeschraubten Dämmstoffanker (1) nach einem oder mehreren der vorhergehenden Ansprüche, **dadurch gekennzeichnet, dass** der Dämmstoffanker (1) kürzer als der Dämmstoff (7) dick ist.

11. Befestigungsanordnung nach Anspruch 10, **dadurch gekennzeichnet, dass** der Dämmstoff (7) die ausgehärtete Masse (19) aufweist, die in nicht ausgehärtetem Zustand in den Hohlschaft (2) des Dämmstoffankers (1) eingebracht worden und durch mindestens ein Fenster (16, 17, 18) in der Umfangswand (15) im Hohlschaft (2) in den Dämmstoff (7) ausgetreten und im Dämmstoff (7) ausgehärtet ist.

12. Befestigungsanordnung nach Anspruch 10 oder 11, **dadurch gekennzeichnet, dass** der Dämmstoff (7) einen Schichtverbunddämmstoff mit einer zu einer Längsachse des Hohlschafts (2) senkrechten Schichtung oder einen geschichteten Faserstoff mit einer zu der Längsachse des Hohlschafts (2) des Dämmstoffankers (1) senkrechten Hauptrichtung seiner Fasern aufweist.

13. Verfahren zu einer Befestigung eines Dämmstoffankers (1) in einem Dämmstoff (7), wobei der Dämmstoffanker (1) zum Einschrauben in einen Dämmstoff (7) zum Befestigen eines Anbauteils an dem Dämmstoff (7) geeignet ist, wobei der Dämmstoffanker (1) einen Hohlschaft (2) zum Einschrauben einer Schraube, ein Dämmstoffgewinde (8), das außen an einer Umfangswand (15) des Hohlschafts (2) zum Einschneiden in den Dämmstoff (7) angeordnet ist, und wobei der Hohlschaft (2) eine Spitze (3) an seinem vorderen Ende aufweist, die insbesondere derart ausgestaltet ist, dass der Dämmstoffanker (1) ohne Vorbohren in den Dämmstoff (7) einschraubbar ist,
**dadurch gekennzeichnet,**
**dass** der Hohlschaft (2) in der Umfangswand (15) mindestens ein Fenster (16, 17, 18) für einen Austritt einer in den Hohlschaft (2) einbringbaren aushärtenden Masse (19) aufweist, **dass** das Fenster (16, 17, 18) unmittelbar an eine Gewindeflanke (13, 14) des Dämmstoffgewindes (8) an einem Übergang von dem Dämmstoffgewinde (8) zur Umfangswand (15) des Hohlschafts (2) angrenzt, und **dass** der Dämmstoffanker (1) in den Dämmstoff (7) geschraubt und die aushärtende Masse (19) in einem nicht ausgehärteten Zustand in den Hohlschaft (2) des Dämmstoffankers (1) eingebracht wird, bis die Masse (19) aus mindestens einem Fenster (16, 17, 18) des Hohlschafts (2) austritt und in den Dämmstoff (7) gelangt.

14. Verfahren nach Anspruch 13, **dadurch gekennzeichnet, dass** die aushärtende Masse (19) zwischen dem Dämmstoff (7) und einer Gewindeflanke (13, 14) des Dämmstoffgewindes (8) des Dämmstoffankers (1) austritt.

## Claims

1. Insulation anchor (1) for screwing into an insulation material (7) to secure a fitting to the insulation material (7), wherein the insulation anchor (1) comprises a hollow shaft (2) for screwing in a screw, an insulation thread (8), which is arranged on the outside of a peripheral wall (15) of the hollow shaft (2) for cutting into the insulation material (7), and in that the hollow shaft (2) has a tip (3) at its front end, which is designed, in particular, such that the insulation anchor (1) can be screwed into the insulation material (7) without pre-drilling, wherein the hollow shaft (2) comprises, in the peripheral wall (15), a plurality of windows (16, 17, 18) offset relative to one another in a longitudinal direction of the hollow shaft (2) for the exit of a curing compound (19) which can be introduced into the hollow shaft (2), wherein at least one of the windows (16, 17, 18) is immediately adjacent to a thread flank (13, 14) of the insulation thread (8) at a transition from the insulation thread (8) to the peripheral wall (15) of the hollow shaft (2), **characterized in that** the insulation anchor (1) has the windows (16, 17, 18) exclusively in a front half of the length of the hollow shaft (2).

2. Insulation anchor according to claim 1, **characterized in that** a thread turn (9) of the insulation thread (8) has an axial offset which is smaller than the width of the thread turn (9) at the axial offset, and **in that** the window (17, 18) for the exit of the compound (19) introduced into the hollow shaft (2) is immediately adjacent to the axial offset of the thread turn (9).

3. Insulation anchor according to claim 2, **characterized in that** the window (17, 18) adjoins an axial offset of the insulation thread (8) which faces away from a direction of screwing of the insulation thread (8).

4. Insulation anchor according to claim 1, **characterized in that** the window (16, 18) is immediately adjacent to a rear thread flank (14) of the insulation thread (8).

5. Insulation anchor according to claim 4, **characterized in that** the window (16) extends in the circumferential direction of the hollow shaft (2) over no more than a quarter of the outer circumference of the hollow shaft (2) or over no more than a third of the outer diameter of the hollow shaft (2).

6. An insulation anchor according to one or more of the preceding claims, **characterized in that** the window (16) extends over at least a quarter or a third or approximately half of the axial distance between the facing thread flanks (13, 14) of adjacent turns of the insulation thread (8).

7. An insulation anchor according to one or more of the preceding claims, **characterized in that** the windows (16, 17, 18) are arranged in a cylindrical portion of the hollow shaft (2) and behind the tip (3).

8. An insulation anchor according to one or more of the preceding claims, **characterized in that** the insulation anchor (1) comprises three windows (16, 17, 18) which are offset from one another by 120° in the circumferential direction of the hollow shaft (2).

9. An insulation anchor according to one or more of the preceding claims, **characterized in that** the hollow shaft (2) of the insulation anchor (1) is closed at its front end (5), in particular by the tip (3).

10. A fastening arrangement comprising an insulation material (7) and an insulation anchor (1) screwed into the insulation material (7), according to one or more of the preceding claims**, characterized in that** the insulation anchor (1) is shorter than the thickness of the insulation material (7).

11. A fastening arrangement according to claim 10, **characterized in that** the insulation material (7) comprises the cured compound (19), which was introduced into the hollow shaft (2) of the insulation anchor (1) whilst in an uncured state and has emerged through at least one window (16, 17, 18) in the peripheral wall (15) of the hollow shaft (2) into the insulation material (7) and has cured within the insulation material (7).

12. A fastening arrangement according to claim 10 or 11, **characterized in that** the insulation material (7) comprises a laminated composite insulation material with a layering perpendicular to a longitudinal axis of the hollow shaft (2), or a layered fibrous material with a principal direction of its fibres perpendicular to the longitudinal axis of the hollow shaft (2) of the insulation anchor (1).

13. A method for fixing an insulation anchor (1) in an insulation material (7), wherein the insulation anchor (1) is suitable for screwing into an insulation material (7) to secure a fitting to the insulation material (7), wherein the insulation anchor (1) comprises a hollow shaft (2) for screwing in a screw, an insulation thread (8), which is arranged on the outside of a peripheral wall (15) of the hollow shaft (2) for cutting into the insulation material (7), and wherein the hollow shaft (2) has a tip (3) at its front end, which is designed in particular such that the insulation anchor (1) can be screwed into the insulation material (7) without pre-drilling,
**characterized in that,**
**that** the hollow shaft (2) has, in the peripheral wall (15), at least one window (16, 17, 18) for the exit of a curing compound (19) which can be introduced into the hollow shaft (2), **that** the window (16, 17, 18) is situated immediately adjacent to a thread flank (13, 14) of the insulation thread (8) at a transition from the insulation thread (8) to the peripheral wall (15) of the hollow shaft (2), and **that** the insulation anchor (1) is screwed into the insulation material (7) and the curing compound (19) is introduced into the hollow shaft (2) of the insulation anchor (1) whilst still in an uncured state, until the compound (19) emerges from at least one window (16, 17, 18) of the hollow shaft (2) and enters the insulation material (7).

14. The method according to claim 13, **characterized in that** the curing compound (19) emerges between the insulation material (7) and a thread flank (13, 14) of the insulation thread (8) of the insulation anchor (1).

## Revendications

1. Ancrage de matériau isolant (1) destiné à être vissé dans un matériau isolant (7) afin de fixer un élément rapporté sur ledit matériau isolant (7), l'ancrage de matériau isolant (1) comportant une tige creuse (2) destinée à recevoir une vis, un filetage pour matériau isolant (8), disposé à l'extérieur sur une paroi périphérique (15) de la tige creuse (2) pour s'enfoncer dans le matériau isolant (7), et en ce que la tige creuse (2) présente, à son extrémité avant, une pointe (3) qui est notamment conçue de telle sorte que l'ancrage de matériau isolant (1) puisse être vissé dans le matériau isolant (7) sans pré-perçage, la tige creuse (2) comportant, dans la paroi périphérique (15), plusieurs fenêtres (16, 17, 18) décalées les unes par rapport aux autres dans une direction longitudinale de la tige creuse (2) pour permettre la sortie d'une masse durcissable (19) pouvant être introduite dans la tige creuse (2), au moins l'une des fenêtres (16, 17, 18) est directement adjacente à un flanc de filet (13, 14) du filetage pour matériau isolant (8), au niveau d'une transition entre le filetage pour matériau isolant (8) et la paroi périphérique (15) de la tige creuse (2), **caractérisé en ce que** l'ancrage de matériau isolant (1) comporte les fenêtres (16, 17, 18) exclusivement dans une moitié avant d'une longueur de la tige creuse (2).

2. Ancrage de matériau isolant selon la revendication 1, **caractérisé en ce que** le filet (9) du filetage pour matériau isolant (8) présente un décalage axial inférieur à une largeur du filet (9) au niveau du décalage axial, et **en ce que** la fenêtre (17, 18) destinée à la sortie de la masse (19) introduite dans la tige creuse (2) est directement adjacente au décalage axial du filet (9).

3. Ancrage de matériau isolant selon la revendication 2, **caractérisé en ce que** la fenêtre (17, 18) est adjacente à un décalage axial du filetage pour matériau isolant (8) qui est opposé à une direction de vissage dudit filetage (8).

4. Ancrage de matériau isolant selon la revendication 1, **caractérisé en ce que** la fenêtre (16, 18) est directement adjacente à un flanc de filet arrière (14) du filetage pour matériau isolant (8).

5. Ancrage de matériau isolant selon la revendication 4, **caractérisé en ce que** la fenêtre (16) s'étend**,** dans la direction circonférentielle de la tige creuse (2), sur une longueur ne dépassant pas un quart de la circonférence extérieure de la tige creuse (2) ou sur une longueur ne dépassant pas un tiers du diamètre extérieur de la tige creuse (2).

6. Ancrage de matériau isolant selon l'une ou plusieurs des revendications précédentes, **caractérisé en ce que** la fenêtre (16) s'étend sur au moins un quart ou un tiers**,** ou sur environ la moitié d'une distance axiale entre les flancs de filet (13, 14) se faisant face de spires adjacentes du filetage pour matériau isolant (8).

7. Ancrage de matériau isolant selon l'une ou plusieurs des revendications précédentes, **caractérisé en ce que** les fenêtres (16, 17, 18) sont disposées dans une partie cylindrique de la tige creuse (2) et derrière la pointe (3).

8. Ancrage de matériau isolant selon l'une ou plusieurs des revendications précédentes, **caractérisé en ce que** l'ancrage de matériau isolant (1) comporte trois fenêtres (16, 17, 18) qui sont décalées de 120° les unes par rapport aux autres dans la direction circonférentielle de la tige creuse (2).

9. Ancrage de matériau isolant selon l'une ou plusieurs des revendications précédentes, **caractérisé en ce que** la tige creuse (2) de l'ancrage de matériau isolant (1) est fermée à son extrémité avant (5), notamment par la pointe (3).

10. Dispositif de fixation comprenant un matériau isolant (7) et un ancrage de matériau isolant (1) vissé dans le matériau isolant (7), selon l'une ou plusieurs des revendications précédentes, **caractérisé en ce que** l'ancrage de matériau isolant (1) est plus court que l'épaisseur du matériau isolant (7).

11. Dispositif de fixation selon la revendication 10, **caractérisé en ce que** le matériau isolant (7) comporte la masse durcie (19) qui, à l'état non durci, a été introduite dans la tige creuse (2) de l'ancrage de matériau isolant (1) et qui, par au moins une fenêtre (16, 17, 18) pratiquée dans la paroi périphérique (15) de la tige creuse (2) s'est écoulée dans le matériau isolant (7) et y a durci.

12. Dispositif de fixation selon la revendication 10 ou 11, **caractérisé en ce que** le matériau isolant (7) comprend un matériau isolant composite stratifié dont la stratification est perpendiculaire à un axe longitudinal de la tige creuse (2), ou un matériau fibreux stratifié dont la direction principale des fibres est perpendiculaire à l'axe longitudinal de la tige creuse (2) de l'ancrage de matériau isolant (1).

13. Procédé de fixation d'un ancrage de matériau isolant (1) dans un matériau isolant (7), l'ancrage de matériau isolant (1) étant adapté pour être vissé dans un matériau isolant (7) afin de fixer un élément rapporté sur le matériau isolant (7), l'ancrage de matériau isolant (1) comportant une tige creuse (2) destinée à recevoir une vis, un filetage pour matériau isolant (8), disposé à l'extérieur sur une paroi périphérique (15) de la tige creuse (2) pour s'enfoncer dans le matériau isolant (7), et la tige creuse (2) comportant à son extrémité avant une pointe (3) qui est notamment conçue de telle sorte que l'ancrage de matériau isolant (1) puisse être vissé dans le matériau isolant (7) sans pré-perçage,
**caractérisé en ce que,**
**que** la tige creuse (2) comporte, dans la paroi périphérique (15), au moins une fenêtre (16, 17, 18) permettant la sortie d'une masse durcissable (19) pouvant être introduite dans la tige creuse (2), **que** la fenêtre (16, 17, 18) jouxte directement un flanc de filet (13, 14) du filetage pour matériau isolant (8), au niveau d'une transition entre le filetage pour matériau isolant (8) et la paroi périphérique (15) de la tige creuse (2), et **en ce que** l'ancrage de matériau isolant (1) est vissé dans le matériau isolant (7) et la masse durcissable (19) est introduite à l'état non durci dans la tige creuse (2) de l'ancrage de matériau isolant (1), jusqu'à ce que la masse (19) sorte par au moins une fenêtre (16, 17, 18) de la tige creuse (2) et pénètre dans le matérieu isolant (7).

14. Procédé selon la revendication 13, **caractérisé en ce que** la masse durcissable (19) s'écoule entre le matériau isolant (7) et un flanc de filet (13, 14) du filetage pour matériau isolant (8) de l'ancrage de matériau isolant (1).
